# EUROPEAN PATENT APPLICATION

(11) **EP 1 890 404 A2**
(43) Date of publication of application: **20.02.2008**
(21) Application number: 07108583.1
(22) Date of filing: 22.05.2007
(51) Int. Cl.: H04B 7/26, H04B 7/155

(54) **Relay station, base station and communication system**

(30) Priority: 17.08.2006 JP 2006222716
(71) Applicant: Fujitsu Ltd., Kawasaki-shi, Kanagawa 211-8588 (JP)
(72) Inventor: Suga, Junichi, Kawasaki-shi, Kanagawa 211-8588 (JP)
(74) Representative: Wilding, Frances Ward

(57) **Abstract**

The present invention utilizes a relay station (3) operable to receive, from a base station (2), a first signal to control transmitting operation of a mobile station (4) and operable to receive a second signal transmitted from said mobile station (4) in accordance with the first signal. The relay station (3) comprises a control unit (41) for generating a control signal affecting said first signal and control transmission of said control signal to said base station (2), and a reception processing part (32 to 34) for receiving a radio signal transmitted from said mobile station (4) which transmits said radio signal in accordance with said first signal which is affected by said control signal.

## Description

### CROSS REFERENCE TO RELATED APPLICATION

This application is related to and claims priority to Japanese Application No. 2006-222716 filed August 17, 2006 in the Japanese Patent Office, the contents of which are incorporated by reference herein.

### BACKGROUND OF THE INVENTION

### 1. Field of the Invention

The present invention relates to a relay station, a base station, and a communication system utilizing radio communication. The present invention is particularly suitable for a relay station, a base station, and radio communication system when the relay station is introduced to a radio communication system specified, for example, by IEEE802.16.

### 2. Description of the Related Art

A radio communication system to realize communication via a radio communication link is now spreading on a world-wide scale as a representative system of the WCDMA and CDMA 2000. In this radio communication system, a plurality of base stations are provided in a service area respectively and a mobile station makes communication with the other communication devices (communication terminals) via any of the base stations. Moreover, in such a system, a service area formed by a base station is overlapped with another service area formed by an adjacent base station. Therefore the communication can be maintained by a handover process even though radio environment of the communication gets worse.

Moreover, as a radio communication system, the technologies, for example, code division multiplex, time division multiplex, frequency multiplex and orthogonal frequency division multiple access (ODFM or OFDMA) are generally employed and thereby a plurality of mobile stations can be connected to a base station simultaneously.

However, when a mobile station is close to the boundary of a service area formed by a base station, even though within the service area, high-speed communication becomes difficult for the mobile station because the radio communication environment is deteriorated.

Therefore, a communication system has been proposed, in which a relay station is provided within the service area of a base station to realize radio communications between a mobile station and the base station via the relay station.

Particularly, introduction of such a relay station (RS) is now discussed by the task group of 802. 16j.

Matters regarding IEEE802.16 are disclosed, for example, in the IEEE Std802,16TM-2004 and the IEEE Std802.16eTM-2005.

### SUMMARY OF THE INVENTION

According to the background of the invention explained above, a mobile station is capable of conducting radio communication with a base station in direct or via a relay station. However, the relay station is provided between the base station and the mobile station only to transfer a signal without controlling transmission.

Accordingly, it is desirable to enable the relay station to control the communication between the relay station and the mobile station.

Moreover, it is also desirable to obtain any advantage leading from any of the following embodiments but that cannot be obtained by the prior art.

An embodiment of a first aspect of the present invention utilizes a relay station operable to receive, from a base station, a first signal to control transmitting operation of a mobile station and operable to receive a second signal transmitted from said mobile station in accordance with said first signal, said relay station comprising a control unit to generate a control signal affecting said first signal and control transmission of said control signal to said base station, and a reception processing part to receive a radio signal transmitted from said mobile station which transmits said radio signal in accordance with said first signal which is affected by said control signal.

Preferably the first signal includes information of radio frame format.

Preferably the transmitting operation includes transmission of a result of measurement of receiving quality.

An embodiment of a second aspect of the present invention utilizes a base station operable to transmit a first signal to control transmitting operation of a mobile station and operable t o receive, via a relay station, a radio signal transmitted from said mobile station which transmits said radio signal in accordance with the first signal, the base station comprising a reception processing part to receive a control signal from said relay station, and a control unit to generate said first signal on the basis of said control signal and controls transmission of said first signal.

An embodiment of a third aspect of the present invention utilizes a relay station operable to receive, from a base station, a first signal to control receiving operation of a mobile station and transmitting a radio signal to said mobile station, said relay station comprising a control unit to generate a control signal affecting said first signal and controls transmission of the control signal to said base station, and a transmission processing part for transmitting a radio signal to said mobile station on the basis of said first signal which is affected by said control signal.

The present invention utilizes a base station operable to transmit a first signal to control receiving operation of a mobile station and transmits, via a relay station, a radio signal to a mobile station which executes receiving operation in accordance with said first signal, said base station comprising a reception processing part to receive a control signal from said relay station, and a control unit to generate said first signal based on said control signal and control transmission of said first signal.

An embodiment of a fourth aspect of the present invention utilizes a relay station operable to receive, from a base station, a first signal to control receiving operation of a mobile station and operable to transmit data received from said base station to said mobile station on the basis of said first signal, said relay station comprising a control unit to generate a control signal when an error is detected in said data received from said base station and control to transmit said control signal to said base station, a reception processing part to receive retransmission data in relation with re-transmission of said data from said base station, and a transmission processing part to transmit, to said mobile station, said received retransmission data on the basis of said first signal which is affected by said control signal.

An embodiment of a fifth aspect of the present invention utilizes a relay station operable to receive, from a base station, a first signal to control receiving operation of a mobile station and operable to transmit data received from said base station to said mobile station, said relay station comprising a storage unit to store said data received from said base station, a control unit to generate a control signal when an error is not detected in said data received but a signal indicating detection of error in said data is received from said mobile station, which receives said data from said relay station, and transmit said control signal to said base station, and a transmission processing part to generate a re-transmission data by using said data stored in said storage unit and transmit said re-transmission data to said mobile station on the basis of said first signal based on said control signal.

An embodiment of a sixth aspect of the present invention utilizes a base station operable to transmit a first signal to control receiving operation of a mobile station and operable to transmit data to said mobile station via a relay station, said base station comprising a reception processing part to receive, from said relay station, a control signal which is generated and transmitted from said relay station when an error is detected in said received data in said relay station, and a transmission processing part to transmit re-transmission data in relation to re-transmission of said data via said relay station to said mobile station.

An embodiment of a seventh aspect of the present invention utilizes a base station operable to transmit a first signal to control receiving operation of a mobile station and operable to transmit data to said mobile station via a relay station, said base station comprising a reception processing part to receive, from said relay station, a control signal which is generated and transmitted from said relay station when an error is not detected in said received data in said relay station but an error is detected in said data received in said mobile station, and a transmission processing part to generate said first signal on the basis of said control signal and transmit said first signal to control receiving operation of said mobile station but not transmitting data in relation to re-transmission of said data to said relay station.

### BRIEF DESCRIPTION OF THE DRAWINGS

Fig. 1 shows an example of a radio communication system.

Fig. 2 shows an example of a base station 2.

Fig. 3 shows an example of a relay station 3.

Fig. 4 shows an example of a mobile station 4.

Fig. 5 shows an example of a radio frame format.

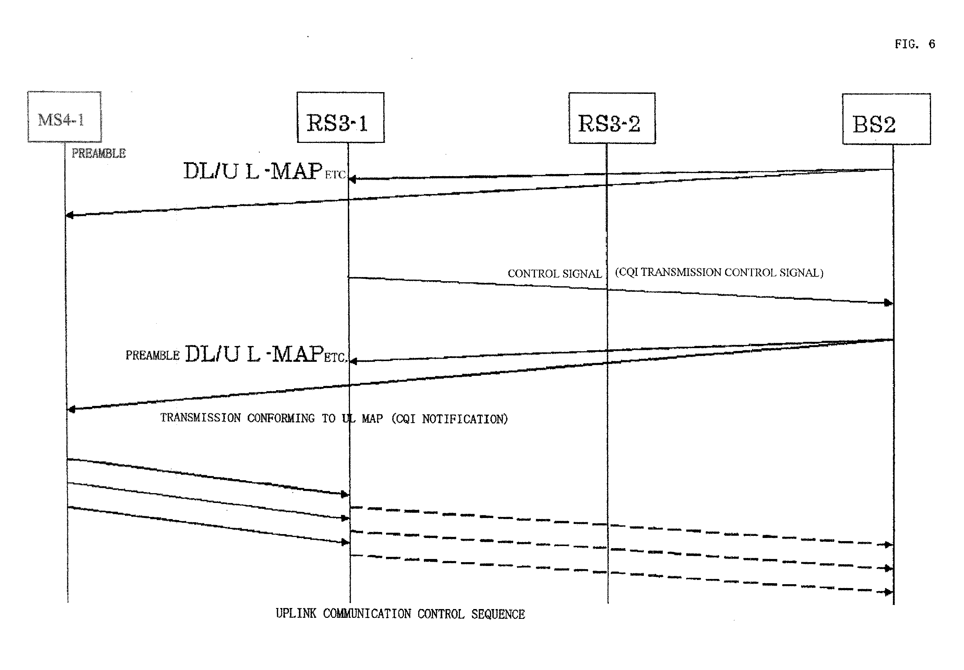

Fig. 6 shows an example of an uplink communication control sequence.

Fig. 7 shows an example of a control signal (CQI transmission control signal.

Fig. 8 shows an example of an uplink communication control sequence.

Fig. 9 shows an example of a re-transmission control sequence.

Fig. 10 shows an example of a control signal (ACK/NACK message).

Fig. 11 shows an example of a processing flow in the relay station 3.

Fig. 12 shows an example of a processing flow in the base station 2.

### DETAILED DESCRIPTION OF THE PREFERRED EMBODIMENTS

A preferred embodiment of the present invention will be explained with reference to accompanying drawings.

First Embodiment

A mobile station is required to set up synchronization to receive radio signals from a base station. Therefore, each base station transmits a signal for synchronization within its own service area. For example, as the signal for synchronization (synchronization signal), a preamble signal which is different in each base station may be used. A mobile station previously stores patterns of a plurality of preamble signals and is capable of selecting a base station as the communication partner by selecting a pattern which has the highest reception quality (for example, the receiving level).

For example, the OFDM (OFDMA) is used as the radio system, a base station executes transmission using a plurality of subcarriers by assigning the transmitting data to each subcarrier. In this case the preamble may be transmitted by using a plurality of subcarriers assigning the preamble to each subcarrier in predetermined patterns. A mobile station receives the preamble via the plurality of subcarriers and monitors receiving quality through matching with known preambles. Then the mobile station synchronizes with a base station from which the mobile station receives a preamble with the highest quality (the best matching condition).

In addition, a base station transmits a signal in a frame format with reference to the synchronization signal. A mobile station establishes frame synchronization by using the synchronization signal and receives mapping (frame format) information (data to control transmitting or receiving operation of the mobile station: MAP data) of the data with reference to the synchronization signal. For example, the MAP data may be allocated right after the synchronization signal.

Timing, channel information, modulation scheme, coding method, and coding rate or the like for mapping data to physical channel (downlink channel (channel to a mobile station side from a base station) and uplink channel (channel to the base station side from the mobile station side)) can be included to the MAP data and the radio frame has a structure corresponding to the MAP data. Moreover, the physical channel can be designated for each mobile station by designating the mobile station by using the identifying information of terminal. Of course, it is also possible to transmit the mapping information to a plurality of mobile stations (for example, all mobile stations within the service area formed by one base station) for transmission and reception of the predetermined signal without designating a particular mobile station.

Accordingly, the data where the parameter required for reception (transmission) of the reception (transmission) timing and receiving (transmitting) channel (reception(transmission) subchannel pattern information) or the like is formed corresponding to the terminal ID (connection ID) can be used as an example of the MAP data.

A mobile station receives radio signals with the reception timing and receiving channel designated by the MAP data and transmits the radio signal with the transmission timing and transmitting channel designated by the MAP data. Accordingly, direct radio communication (without a relay station) with the base station can be realized.

Meanwhile, a relay station similarly receives the synchronization signal from a base station to establish synchronization. Moreover, the relay station receives the MAP data with reference to the synchronization signal and transmits the transmitting data to the mobile station in accordance with the parameters required for transmission such as transmission timing and transmitting channel (transmitting subchannel pattern information) or the like designated by the MAP data. The transmitting data to the mobile station can be obtained using a communication link (MMR link) between the base station and the relay station. Here, the relay station may previously acquire parameters such as the transmission timing and channel or the like designated by the MAP data using the MMR link if the parameter is transmitted via the MMR link.

Namely, the relay station receives the radio signal addressed to own station with the reception timing and receiving channel designated by the MAP data or by the message via the MMR link and transmits the radio signal to be transmitted from the own station with the transmission timing and transmitting channel designated by the MAP data. Note that the mobile station is not required to receive directly signals transmitted via the MMR link because the MMR link is a communication link between the base station and the relay station.

Moreover, the relay station does not need to relay the MAP data to the mobile station. One of the reasons is that the MAP data is considered to be received more easily by the mobile station than the ordinary transmitting data (user data) with transmission in higher transmitting power or in lower transmitting rate only of the relevant transmitting part.

A mobile station receives the MAP data in direct from a base station and also receives the radio signal in accordance with such MAP data in order to receive the transmitting data re-transmitted from the relay station.

Therefore, the mobile station is capable of receiving the data in direct from the base station and is also capable of receiving, from the relay station, the data received once by the relay station from the base station.

Here, the mobile station conducts reception and transmission in accordance with the MAP data transmitted from the base station and is not required to recognize that the relay station relays radio signals to realize radio communication with the base station. Moreover, it is desirable that the relay station does not relay (transmit) the synchronization signal periodically transmitted from the base station to the mobile station. If the relay station transmits the synchronization signal, it is considered to occur that the mobile station is synchronized with the relay station by receiving the synchronization signal from the relay station and the MAP data cannot be found even if it is searched with reference to the received synchronization signal. This forces the mobile station to recognize existence of the other stations different from the base station in the communication system.

As explained above, a plurality of candidates of the transmitting and receiving paths for the mobile station can be attained by utilizing the relay station and therefore radio communications of mobile stations in the area near the boundary of the service area of the base station can be supported.

As explained above, when the MAP data is not transmitted to the mobile station from the relay station, the relay station does not have means for controlling transmitting and receiving operations of the mobile station from the relay station.

Therefore, in this embodiment the relay station transmits signal to the base station to control the transmitting and receiving operations of the mobile station.

Detail structure and operation of each unit will be explained below with reference to the accompanying drawings.

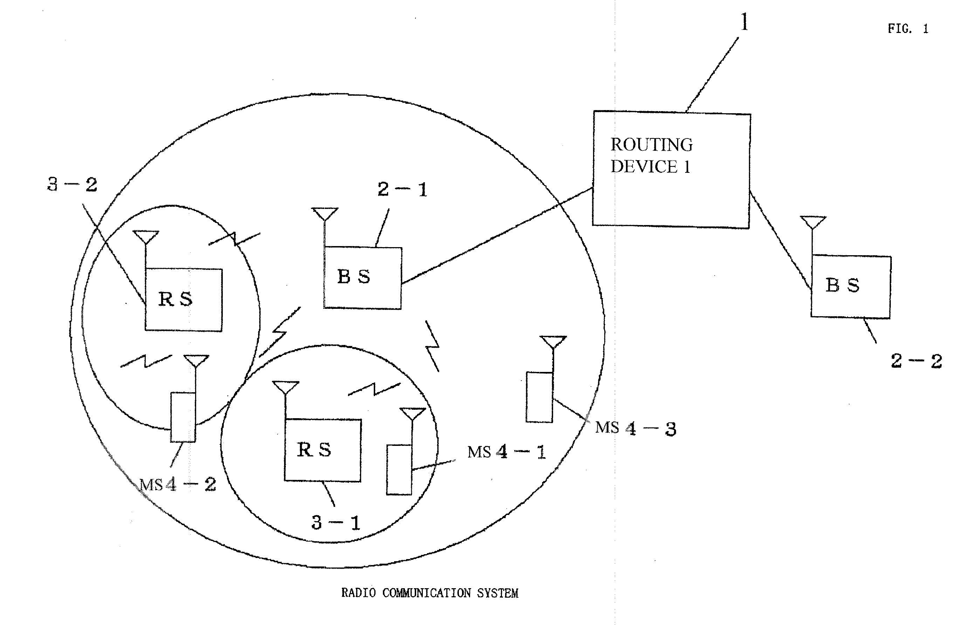

Fig. 1 shows an example of a structure of a radio communication system of a first embodiment. In Fig. 1, numeral 1 denotes a routing device; 2, a base station (BS); 3, a relay station (RS); and 4, a mobile station (MS), respectively. Here, the mobile station 4 can realize radio communication in direct (without relay station) with the base station 2 within the service area of the base station 2 and can also realize radio communication via the relay station 3. One or more relay stations 3 are provided within the service area of the base station 2 for radio communication with the mobile station 4.

The base station 2 is connected with the routing device 1 to receive data from the mobile station 4 and transmit the received data to the routing device 1 and also to execute control of transmission of data received from the routing device 1 to the mobile station 4. The routing device 1 is connected with a plurality of base stations for rooting data to be delivered to a destination device by transmitting the data received from the base station 2 to the other routing device or the other base station. Preferably, the base station 2 transfers the data to the routing device after conversion to a packet format. Here, it is desirable for the routing device 1 to provide a database which stores location registration areas of mobile stations (for example area information in which the mobile station now exists, wherein the area may be formed by a plurality of service areas of base stations) and/or a service type of each mobile station and the routing device 1 can acquire such data from this database as required at the time of routing process.

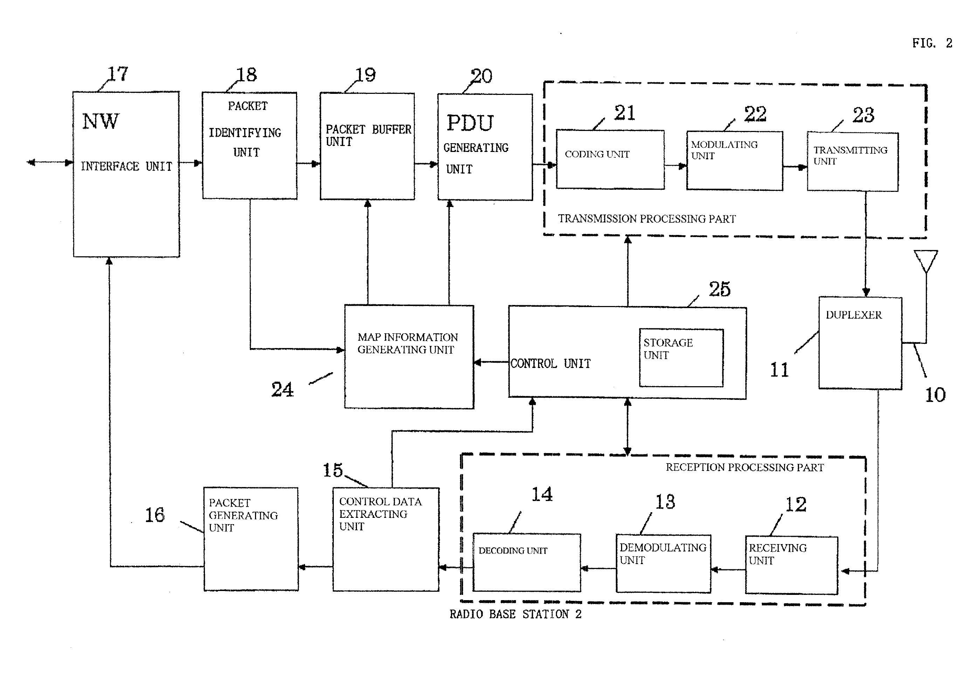

Next, a structure of the base station 2 will be explained in more detail with reference to Fig. 2.

In Fig. 2, numeral 10 denotes an antenna for transmitting and receiving radio signal with the relay station 3 and mobile station 4; 11, a duplexer using in common the antenna 10 in the transmitting and receiving systems; 12, a receiving unit; 13, a demodulating unit for demodulating the receiving signal; 14, a decoding unit for decoding the demodulated receiving signal; 15, a control data extracting unit for extracting control data from the decoded data to transfer a communication line determining unit 17 and to transfer the other data such as user data to a packet generating unit 16; 16, the packet generating unit for transferring the data transferred from the control data extracting unit to a NW interface unit as the packet data.

Numeral 17 denotes an interface unit to form an interface (here, packet communication is conducted) to the routing device 1; 18, a packet identifying unit for identifying the IP address included in the packet data received from the NW interface unit 20, determining the mobile station as the communication partner based on the IP address data, acquiring the QOS corresponding to the ID, issuing request for band assignment by giving the ID, QOS information to a MAP information generating unit 24, and storing packet data transferred from the NW interface unit 17 to a packet buffer unit 19. The ID of the mobile station 4 is exemplary obtained by referring a storing unit which stores relation between the IP address and the ID of the mobile station 4. Preferably the correlation information also includes relation between QoS and the ID of the mobile station 4 for above. For example, an IP address, QoS and the ID of the mobile station 4 are stored as a record.

Numeral 24 denotes a MAP information generating unit for determining a communication path, upon reception of the band assignment request, by searching a path using the ID of mobile station 4 as a key and instructing a PDU generating unit 24 to determine the mapping area according to the QOS and forming a frame in accordance with the mapping area. In this case, the data to be transmitted is read from the packet buffer unit 19 and is then transferred to the PDU generating unit 20 together with the MAP data. Since a communication link (MMR link) is also provided between the base station 2 and the relay station 3, data can also be transmitted to the relay station with the corresponding timing and channel with inclusion of the identifying information and transmission/reception timing of the relay station 3 as the communication partner to the MAP data.

Moreover, the MAP information generating unit 24 generates the MAP data on the basis of the control signal from the relay station 3 depending on instruction from the control unit 25. For example, the UL MAP data for defining the uplink communication is generated on the basis of the control signal from the relay station 3 and the DL MAP data for defining the downlink communication is generated on the basis of the control signal from the relay station 3.

Numeral 20 denotes a PDU generating unit for generating PDU to store the MAP data, transmitting data (including a measurement control data) to each region of the radio frame formed with reference to the synchronization signal (preamble) and then transmitting the PDU signal to a coding unit 21. Numeral 21 denotes the coding unit; 22, a modulating unit; and 23, a transmitting unit, respectively. The PDU data is sequentially modulated after coding process such as an error correcting coding process and this PDU data is transmitted as radio signals via the antenna 10 from the transmitting unit 23.

Numeral 25 denotes a control unit for controlling the transmitting and receiving operations by controlling a transmission processing part and a reception processing part, acquiring control data from the relay station 3 extracted by the control data extracting unit 15, and instructing the MAP information generating unit 24 to generate MAP data on the basis of the control data.

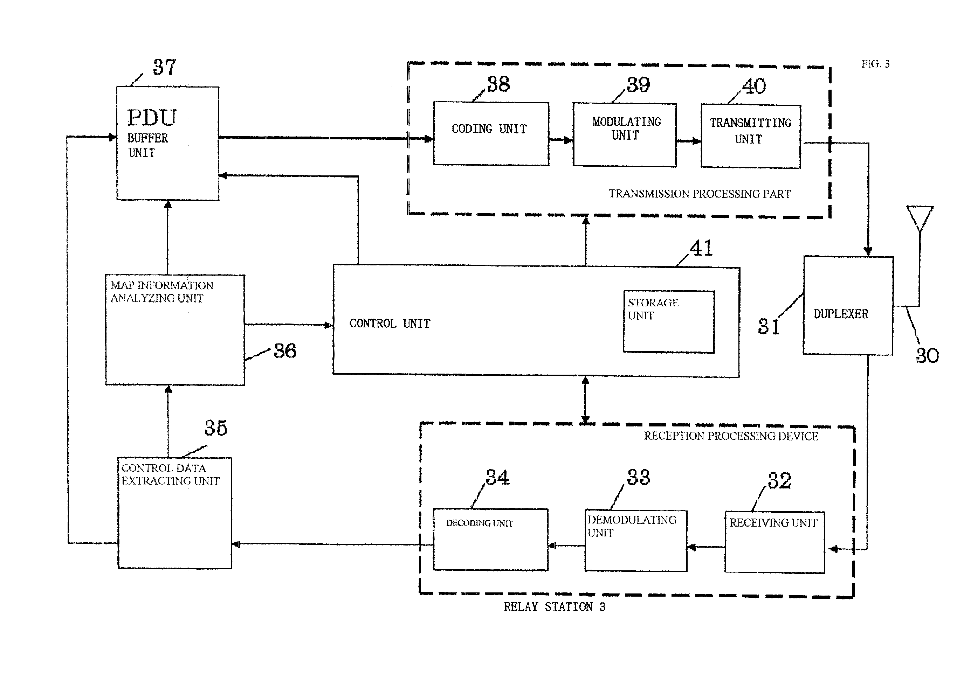

Fig. 3 shows an example of a structure of the relay station 3.

In Fig. 3, numeral 30 denotes an antenna for transmitting and receiving radio signals with the base station 2 and the mobile station 4; 31, a duplexer for using in common the antenna 10 for transmission and reception; 32, a receiving unit; 33, a demodulating unit for demodulating receiving signals; 34, a decoding unit for decoding the demodulated receiving signals; 35, a control data extracting unit 35 for extracting the MAP data (received from the base station 2) from the decoded data and giving the MAP data to a MAP information analyzing unit 36 and for transferring data, which is addressed to the mobile station 4 and is received from the base station 2, to a PDU buffer unit 37. In the case where the radio signal is received from the mobile station 4, the receiving data is also transferred to the PDU buffer unit 37 for transmission to the base station 2.

Numeral 37 denotes the PDU buffer unit for transferring the data stored to the coding unit 38 to transmit the corresponding data to the mobile station 4 received from the base station 2 in accordance with the transmission timing and channel notified from the base station 2 on the basis of the MAP data analyzed by the MAP information analyzing unit 36 or the data received via the MMR link. The data to the mobile station 4 is received via the communication link (MMR link) formed between the base station 2 and relay station 3. Since the identifying information of the relation station 3, transmission timing and channel information is included in the MAP data transmitted from the base station 2, the relay station 3 can communicate with the base station 2 by receiving data with the designated timing and channel (the uplink direction is also defined with the MAP data).

Numeral 34 denotes a coding unit and 39, a modulating unit, respectively. The transmitting data from the PDU buffer unit 37 is coded and is then transferred to a transmitting unit 40 after the modulation process for transmission of user data or the like with the transmission timing and channel acquired with the MAP information analyzing unit 36.

Numeral 40 denotes a transmitting unit for transmitting signals as radio signals to the mobile station 4 and base station 2 via the antenna 30.

Numeral 41 denotes a control unit for deciding necessity of control for communications between the relay station 3 and the mobile station 4 in accordance with the receiving condition or the like in the reception processing part, generating, upon decision that control is necessary, the corresponding control signal (data) and controlling the transmission processing part to transmit the control signal to the base station 2 via the MMR link. Namely, the control unit 25 of the base station 2 and the control unit of the relay station 3 are capable of mutually transmitting and receiving the control signals via the MMR link.

The control unit 41 controls the transmission processing part and the reception processing part to conduct transmission and reception in the transmission and reception timings acquired with the MAP information analyzing unit 36.

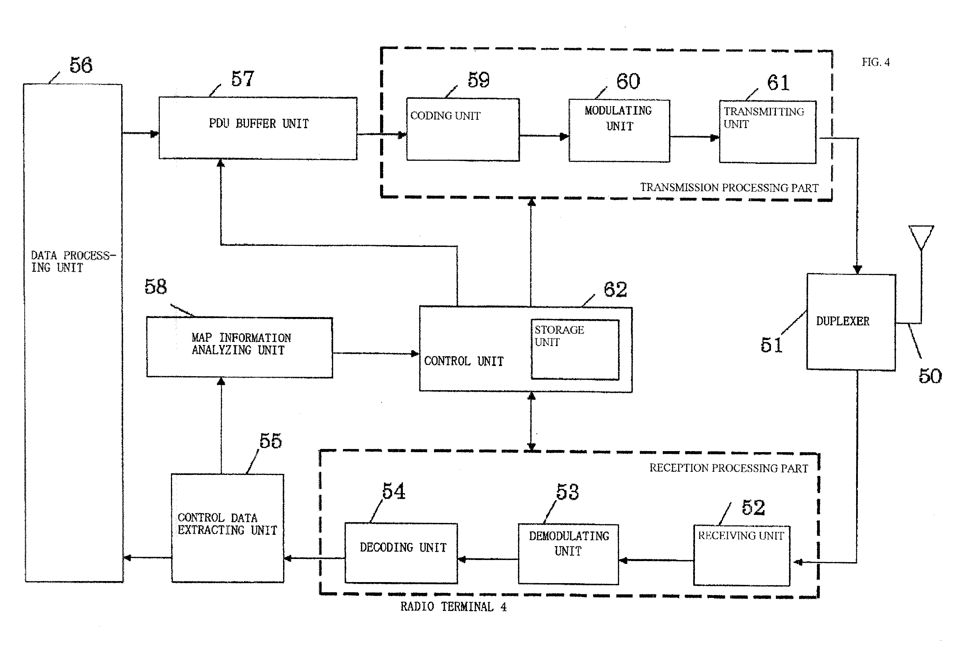

Fig. 4 shows an example of a structure of the mobile station 4.

In this Fig. 4, numeral 50 denotes an antenna for transmitting and receiving the radio signal with the relay station 3 and the base station; 51, a duplexer for using in common the antenna 50 for transmission and reception; 52, a receiving unit; 53, a demodulating unit for demodulating the receiving signal; 54, a decoding unit for decoding the demodulated receiving signals; 55, a control data extracting unit for extracting control data from the decoding data, applying the MAP data, when it is detected, to the MAP information analyzing unit 58 and transferring the other data (user data) to a data processing unit 56; and 56, the data processing unit for displaying of various data and processing audio outputs of these data included in the receiving data.

Moreover, the user data which is desired to be transmitted to another device is inputted to a PDU buffer unit 57 from the data processing unit 56.

Numeral 57 denotes a PDU buffer unit for outputting stored data to a coding unit 59 to enable transmission of the data from the data processing unit 56 in the transmission timing and transmitting channel designated by the MAP data.

Numeral 58 denotes a MAP information analyzing unit for analyzing the MAP data received in direct from the base station 2 and applying the result of analysis to a control unit 62. Namely, the transmission and reception timings of various data are notified to the control unit 62.

Numeral 59 denotes a coding unit; and 60, a modulating unit. The coding and modulating processes for the transmitting data are executed under the control of the control unit 62 to conduct transmission of the transmitting data from the PDU buffer unit 57 in the transmission timing and transmitting channel designated by the MAP information.

The transmitting unit 61 transmits the radio signal via the antenna 50.

The control unit 62 controls operations of the transmission processing part and the reception processing part on the basis of the MAP data.

Next, an example of the frame format will be presented and a communication sequence in the system explained above will be explained in detail. Here, a frame format conforming to the IEEE Std802.16d, e will be considered as an example but the present embodiment is not limited thereto.

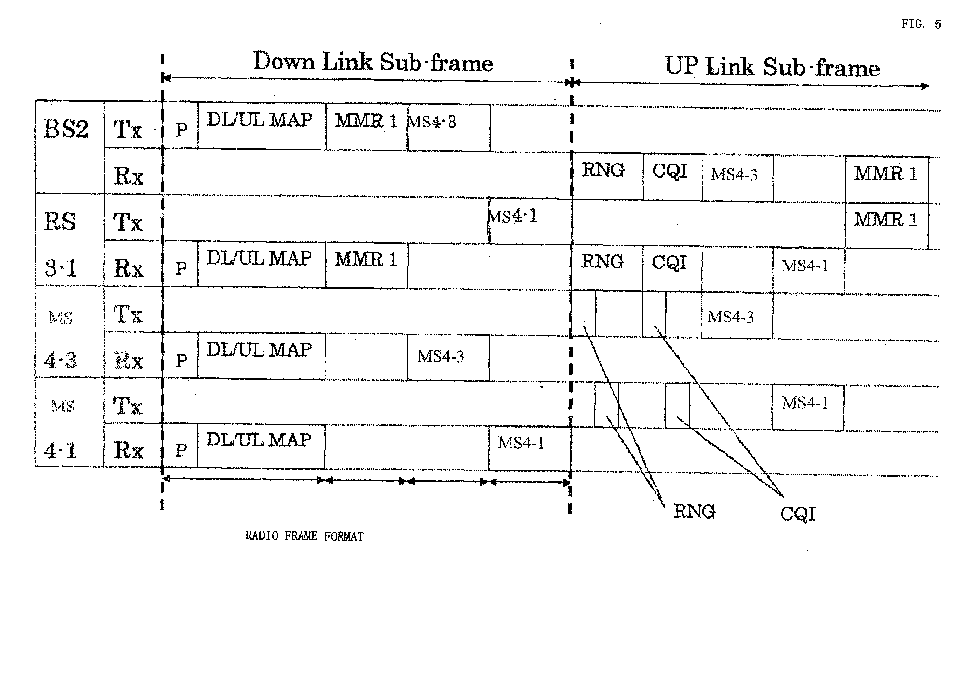

Fig. 5 shows an example of a frame format of radio signals transmitted and received among the base stations, relay stations, and mobile stations. BS2-1, RS3-1, MS4-1, and MS4-3 are in the relationship of allocation shown in Fig. 1.

In Fig. 5, Tx, Rx respectively indicate transmission and reception. Therefore, BS2 transmits preamble (P) as the leading frame, followed by sequential transmissions of DL/UL MAP, MMR1 (transmitting and receiving data to and from the relay station 3-1). The preamble is formed in the known pattern to be transmitted for enabling synchronization of the mobile station 4 and relay station 3 with the base station. When the OFDM (OFDMA) is used, the signal of the predetermined pattern is transmitted via a plurality of sub-channels.

Transmission of the preamble is followed by DL/UL MAP which is the region to store the control data (MAP data) for notifying the transmission/reception timings and channels to the relay station 3 and mobile station 4. For example, this region includes the transmission timing and channel information of MMR 1 transmitted as the MMR link to the relay station via the downlink channel from the base station, the timing and transmitting channel information for data transmission (MS4-1, MS4-3) to the mobile stations 4-1, 4-3, and UL-MAP data (radio frame format information) indicating with which timing and channel the data (MMR1, MS4-1, MS4-3) should be transmitting via the uplink channel.

Accordingly, each relay station 3 and mobile station 4 (4-1, 4-3) are synchronized with the frame timing of the base station 2 by receiving in direct the preamble P from the base station 2, receives the DL/UL MAP with reference to this synchronization, and executes transmission and reception of data in the corresponding timing and channel by detecting the timing and channel for transmission and reception.

In the example of Fig. 5, the mobile station 4-3 receives in direct the MS4-3 from the base station 2 and transmits in direct the MS4-3 to the base station 2.

However, the mobile station 4-1 cannot receive in direct the MS4-1 from the base station 2 and cannot transmit in direct the MS4-1 to the base station 2.

Therefore, the relay station RS3-1 receives, from the base station 2, data to be transmitted to the mobile station 4-1 in the timing of MS4-1 by analyzing the DL/UL MAP and receiving MMR1 including a message addressed to own station based on the UL MAP. Similarly, RS3-1 transmits the data received by the MMR1 in the timing of MS4-1 by detecting that the transmission timing of data to the mobile station 4-1 designated by the DL/UL MAP is MS4-1 in the figure.

Meanwhile, since the mobile station 4-1 is synchronized with the base station 2 with the preamble transmitted from the base station 2 and analyzes the DL/UL MAP to recognize that the data is transmitted in the timing (MS4-1) and channel designated thereby, this mobile station 4-1 operates to receive the data transferred from the relay station 4 in such timing and channel.

Accordingly, the mobile station 4 can receive the data without recognition of the data transmitting source (without discrimination of the base station 2 and the relay station 3).

RNG indicates ranging signal transmitted from the mobile station (MS4-1, 4-3). The ranging signal is a known signal, which is received in the base station 2 or the relay station 3. Deviation of reception timing (phase deviation), deviation of receiving frequency, and increment/decrement information of the required transmitting power are obtained in the reception processing part and such information is reported as the adjustment information to the base station 2. In this example, the ranging signal 1 from the mobile station 4-3 is received in direct in the RNG receiving period of the base station 2 and the ranging signal from the mobile station 4-1 is received in the RNG receiving period (same as the RNG receiving period of the base station 2) of the relay station 3. The ranging signal from the mobile station 4-1 received by the relay station 3 is transferred to the base station 2 via the uplink MMR shown by the MMR1. In this case, the adjustment information is generated by the relay station 3 and is then applied to the base station 2 with addition to the ranging signal.

CQI indicates a transmitting period for reporting the result of measurement of the reception quality of the preamble or the known signal such as the pilot signal measured with the mobile station. The base station 2 controls the transmission processing part on the basis of the received CQI to change the transmission parameter such as modulation scheme, coding method and coding rate. The CQI is also transferred to the base station 2 via the uplink MMR shown by the MMR1.

Transmission control of the signal transmitted via the uplink such as RNG, CQI, etc. is conducted by using the MAP data. For example, the MAP data sets the timing for allowing transmission of RNG, CQI in a short cycle or long cycle. In other words, for example, when the RNG and CQI signals transmission allowing period is provided once (defined) during single transmission among the M times of transmission of the MAP data, a value of M is changed. Moreover, the RNG and CQI can individually designate the transmission timing and channel to each mobile station 4 or can designate such transmission timing and channel to a plurality of mobile stations 4.

In this frame format example, the period in which transmission is conducted to RS, MS from BS2, the period (MMR period) in which transmission is conducted to RS from BS2, period in which transmission is conducted to MS from RS3-1, and the period in which transmission is conducted to MS from RS3-2 are separated in time. Moreover, the uplink communication period is separated in time from the downlink communication period. Namely, transmission and reception in each section are separated with time division system (the same frequency band may be used), and the other separating method such as frequency separation method can also be employed.

Next, communication control between the relay station 3 and mobile station 4 (4-1) when such frame format is used will be explained below.

First, the reception processing part of the mobile station 4-1 is synchronized with the radio frame transmitted from the base station 2 by receiving the preamble transmitted from the base station 2 to receive the MAP data with reference to the preamble. The MAP data is analyzed with the MAP data information analyzing unit 58 and the result of analysis is then sent to the control unit 62. Therefore, the control unit 62 controls respectively the transmission processing part and the reception processing part to operate in accordance with the designated timings by detecting the transmission and reception timings of each data designated by the MAP data.

Meanwhile, the reception processing part of the relay station 3 is also synchronized with the radio frame transmitted from the base station 2 by receiving the preamble transmitted from the base station 2 to receive the MAP data with reference to this preamble, to receive the data to the mobile station 4-1 via the MMR link, and to transmit the received data to the mobile station 4-1via the MMR link in the transmission timing designated by the MAP data as a transmission timing to the mobile station 4-1.

The MAP information analyzing unit 36 of the relay station 3 interprets the MAP data (UL MAP) and applies the transmission timing in the uplink direction designated by the MAP data to the control unit 41. Therefore, the control unit 62 can receive the radio signal transmitted from the mobile station 4-1 by controlling the reception processing unit in accordance with such timing.

However, since the radio signals from the mobile station 4 are transmitted in accordance with the MAP data of the base station 2, the relay station 3 cannot control the transmission of the mobile station 4.

The control unit 41 of the relay station 3 generates, upon decision that it is necessary to control the transmitting operation of the mobile station 4 (4-1) under the control thereof, a control signal including content to be reflected on the MAP data and transmits this control signal to the base station 2 via the MMR link through the transmission processing part.

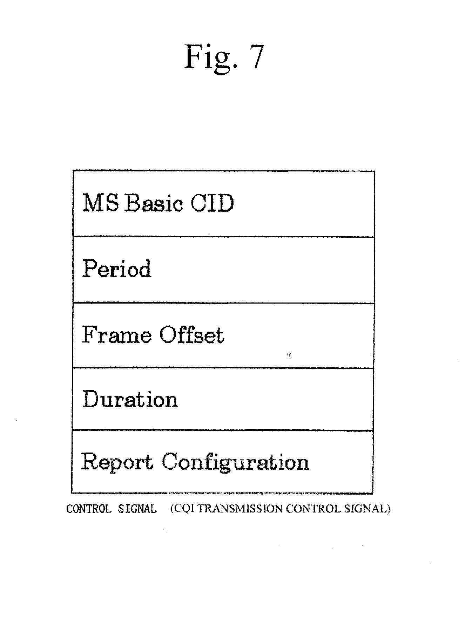

As the control signal, for example, the signal giving influence on the signal to control the CQI transmitting operation in the mobile station 4 (4-1) may be considered. In more concrete, the control unit 41 generates the control signal (CQI transmission control signal) shown in Fig. 7 and then transmits the same signal to the base station 2.

In the figure, MS Basic CID indicates the identifying information of the mobile station as the object to be controlled in its transmitting operation. Here, it is also allowed that an ordinary mobile station under the control thereof is designated as the object of control or all mobile stations are designated as the object of control without designating a particular one mobile station.

Moreover, Period means the period (cycle) of transmission of the particular signal and it is also possible to designate M explained previously.

Frame Offset designates timing to start transmission under the control of this time. For example, the frame offset is set as frame number difference between a number of frame from which the control should be started and a number of frame which is now under transmission. It is also possible to set the frame offset as a frame number from which the control should be started.

Duration indicates the valid period for the control of this time. For example, it is possible to instruct to implement the control for N radio frames.

Report Configuration instructs information to be transmitted from the mobile station 4 and internal operation of the mobile station 4. For example, a kind of data to be transmitted may be designated or it is also possible for the CQI information to be transmitted from the mobile station 4 to designate a signal to be measured in its receiving quality and a type of transmission as the CQI information.

The control unit 25 of the base station 2 instructs, upon reception of the control signal from the relay station 3, the MAP information generating unit 25 to reflect content of the control signal to the MAP data to be transmitted later. Preferably, all of the request content of the relation station 3 are reflected but it is sometime difficult to reflect all of the content from the viewpoint of schedule. Therefore, it is preferable that only the available range is reflected on the MAP data.

For example, frequency to permit transmission to the mobile station 4 (only to 4-1, in some cases) is increased by the MAP data. Namely, data for admitting transmission of the MAP data to the mobile station 4 only once among M times has been set, but the transmission frequency can be controlled by setting the data for admitting transmission of the MAP data to the mobile station 4 once among M+P (or M-P) times (P is a positive number). Moreover, the transmission timing designated by the MAP data can also be set to the timing which is convenient for the relay station 3. Moreover, such reflection rule can also be continued until transmission of N times of the MAP data. In addition, when a kind of data transmitted from the mobile station 4 and internal operation can be designated with the MAP data, the MAP data is set on the basis of the control signal from the relay station 3. For example, the MAP data is adjusted to become the content requested by the control signal and thereafter such MAP data is transmitted.

When the MAP data reflecting the content of the control signal from the relay station 3 is transmitted from the base station 2, the mobile station 4-1 receives this MAP data and the control unit 62 controls internal operation and transmitting operation on the basis of the MAP data reflecting the content of the control signal.

For example the receiving quality (CINR) of the designated object signal is measured and the CQI data corresponding to the receiving quality measured in the designated timing is transmitted.

Since the relay station 3 receives the radio signal transmitted from the mobile station 4 in the timing and channel designated by the MAP data of the base station 2, it can also receive the transmitting signal which is required to be changed in transmission timing or the like by the control signal.

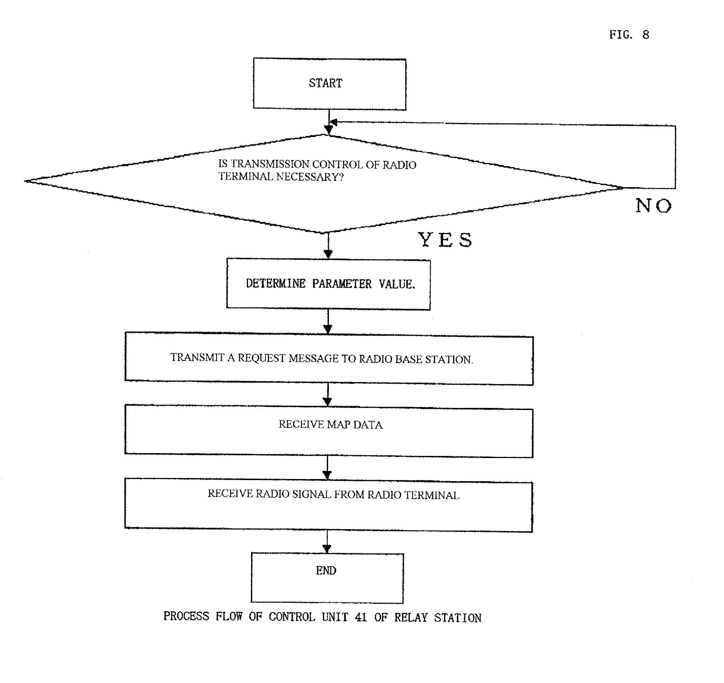

Fig. 8 shows an example of a processing flow of the control unit 41 of the relay station 3.

Namely, the control unit 41 of the relay station 3 determines whether control of the transmitting operation is necessary for the mobile station 4 (for example, only the terminal 4-1) under the control thereof. When such control is necessary, the parameters to be changed, for example, MS Basic CID, Period, Frame Offset, Duration, Report Configuration, etc. are determined. The control signal including changed parameters is then transmitted to the base station 2. Then the relay station 2 receives the MAP data (particularly, UL MAP data) reflecting such parameter. The reception processing part of the relay station 3 receives the radio signal transmitted from the mobile station 4 in accordance with such UL MAP data.

For example, the reception processing part measures receiving quality of the radio signal received and thereafter changes the modulation scheme, coding method, and coding rate, etc. for transmission to the mobile station 4 on the basis of the measured receiving quality.

Here, it is also allowed to store the receiving signal to the storage unit of the control unit 41 by conducting only the reception. The reason is that the receiving signal can be used for subsequent analysis and it can be reported to the base station 2 via the MMR link as required.

Second Embodiment

In the first embodiment, the transmitting operation of the mobile station has been controlled but in this second embodiment, the receiving operation of the mobile station is controlled.

Namely, when the control unit 41 of the relay station 3 determines it is necessary to control the receiving operation of the mobile station 4 (4-1) under the relay station, it generates content desiring reflection on the MAP data as the control signal and transmits this control signal to the base station 2 via the MMR link through the transmission processing part.

Therefore, the control unit 25 of the base station 2 receives this control signal and reflects content of this control unit on the MAP data (particularly, DL MAP) to be transmitted later.

Accordingly, the MAP data reflecting the control signal from the relay station 3 is transmitted from the base station 2 and the mobile station 4 (4-1) having received the MAP data reflecting the control signal conducts the receiving operation (receiving process) on the basis of such MAP data reflecting the control signal. Content of the control signal is similar to that in the first embodiment and the object of reflection is DL MAP data in this case.

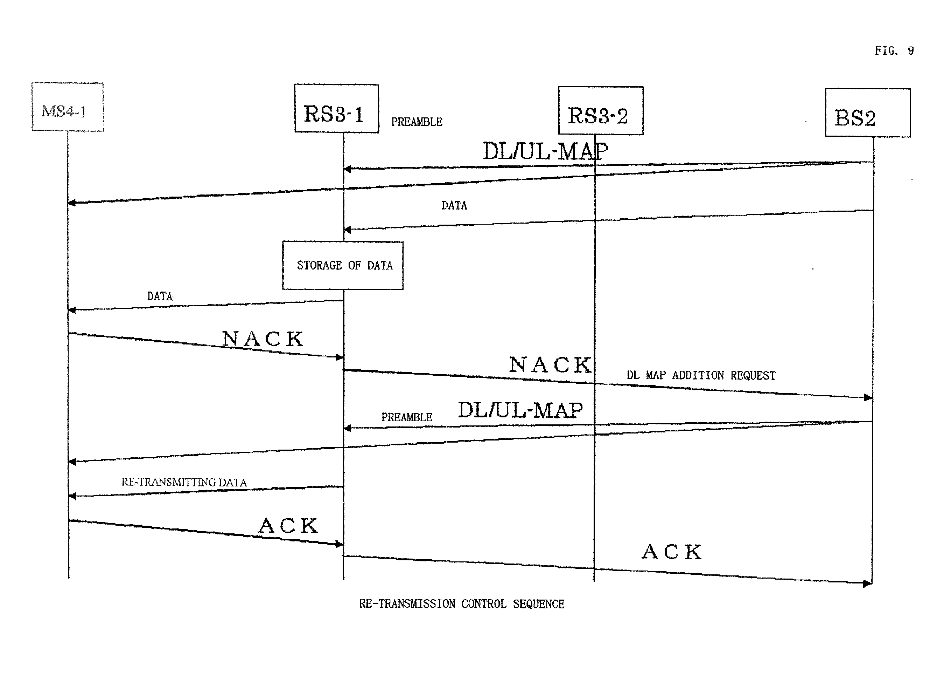

Next, an example where the mobile station 4 is provided with the function of re-transmission control (particularly, HARQ (Hybrid Auto Repeat request, employed also in the MCDMA system) is considered here. Control of the receiving operation of the mobile station in this example will be explained below with reference to Fig. 9.

Structures of the base station 2, relay station 3-1, and mobile station 4-1 similar to that of the elements shown in Fig. 2 to Fig. 4.

Fig. 9 shows an example of the sequence for the re-transmission control.

First, the reception processing part of the mobile station 4-1 is synchronized with the radio frame transmitted from the base station 2 by receiving the preamble transmitted from the base station 2 to receive the MAP data with reference to the preamble. The MAP data is analyzed with the MAP data information analyzing unit 58 and the result of analysis is then applied to the control unit 62. Therefore, the control unit 62 detects the transmission and reception timings of the data (for example, user data) designated with the MAP data and controls the transmission processing part and the reception processing part to operate in accordance with the designated timings. Here, the user data designated with the MAP data is received.

The reception processing part of the relay station 3 also synchronized with the radio frame transmitted from the base station 2 by receiving the preamble transmitted from the base station 2 and receives the user data for the mobile station 4-1 via the MMR link by receiving the MAP data with reference to the preamble. This reception processing part also transmits the received user data to the mobile station 4-1 in the transmission timing designated to the mobile station 4-1 with the MAP data. However, the control unit 41 of the relay station 3 controls to store a copy of the transmitting data to the storage unit (or PDU buffer unit 37). Moreover, the control unit 41 also executes the process to detect an error of the decoding result of the user data obtained with the reception processing part. The data obtained as a result of decoding is error-detection coded. Namely, the error-detection coding (for example, addition of CRC bit) is conducted before the (error-correction) coding in the transmission processing part of the base station 2 or relay station 3 in the transmitting side. Result of error detection and the user data received are stored in the storage unit within the control unit 41 together with the identifying data such as radio frame number, etc.

The mobile station 4-1 having received the user data from the relay station 3-1 executes demodulation and (error-correcting) decoding with the reception processing part and also executes the error correction process using the CRC bit, etc. for the decoding result.

Here, when no error is detected, the ACK signal is transmitted via the relay station 3 in the timing designated by the MAP data. When an error is detected, the NACK signal is transmitted. Even during transmission of the NACK signal, the mobile station 4-1 stores the receiving data to the storage unit within the control unit 62.

The control unit 41 of the relay station 3 having received the ACK signal can notify correct reception of data for the mobile station 4-1 to the base station 2 by transferring the ACK signal to the base station 2.

Meanwhile, when the NACK signal is received, the relay station 3 is requested to execute re-transmission of the user data to the mobile station 4-1, but it cannot conduct re-transmission without control of the MAP data transmitted by the base station.

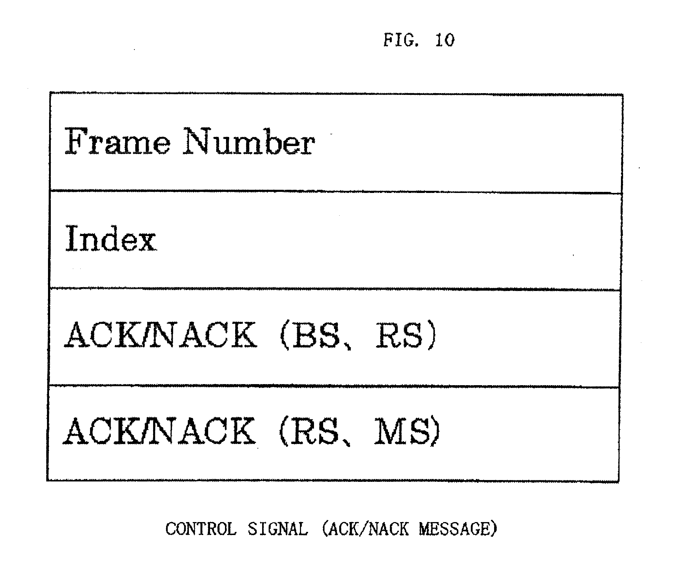

Therefore, the control unit 41 of the relay station 3 generates the control signal and transmits the control signal to the base station 2 via the MMR link. An example of the control signal is shown in Fig. 10.

In this example, the control signal includes Frame Number, Index, ACK/NACK (between BS and RS), and ACK/NACK (between RS and MS).

The Frame Number and Index are information pieces for identifying the corresponding user data, showing a radio frame number when the data was transmitted and a number to discriminate a user data within a same frame respectively. ACK/NACK (between BS and RS) and ACK/NACK (between RS and MS) are respectively the data for notifying, with the ACK or NACK, whether the transmission of user data has been normally received (without detection of error) between the BS and RS, and whether the transmission of user data has been normally received (without detection of error) between the RS and MS. The ACK/NACK (between the BS and RS) can be set in accordance with result of error detection already stored in the storage unit within the control unit 41. Namely, when no error is detected, ACK is set in this data region, but when error is detected, NACK is set in this data region. The region of ACK/NACK (between the RS and MS) is set in accordance with content of reception from the mobile station 4-1. Namely, when the relay station 3 receives ACK, ACK is set to this region, while when the relay station 3 receives NACK, NACK, is set.

Accordingly, the control unit 25 of the base station 2 receives the control signal from the control unit 41 of the relation station 3 via the MMR link and reflects ACK/NACK (between BS and RS) and ACK/NACK (between RS and MS) on the MAP data to be transmitted later.

Namely, when NACK is set between BS and RS, the control unit 25 of the base station 2 controls the MAP information generating unit 24 to generate the MAP data assigning the timing for transmission of data to the mobile station 4-1 and also controls the transmission receiving part to transmits this MAP data. The MAP data also defines the transmission timing of MMR for re-transmission of the user data to the relay station 3.

In this case, as explained above, the user data is re-transmitted from the base station 2 via the MMR in accordance with the MAP data, the relay station 3 transfers this MAP data and the mobile station 4-1 receives the re-transmission data via the relay station 3 and conducts again the error-correcting coding and error detection after synthesizing with the data which has been received and stored previously.

When ACK is set between the BS and RS, while NACK is set between the RS and MS, the control unit 25 of the base station 2 controls the MAP information generating unit 25 to generate the MAP data assigning the timing for transmission of data to the mobile station 4-1 and also controls the transmission processing device to transmit the MAP data.

However, in this case, the user data in accordance with the MAP data from the base station 2 is not re-transmitted. Namely, the MAP data does not need to set transmission timing for the re-transmission of the user data via the MMR-link. Instead, the relay station 3 controls, in accordance with this MAP data, the transmission processing part to transmit the user data stored in the storage unit within the control unit 41 to the mobile station 4. Accordingly, re-transmission from the base station 2 is no longer required for this user data.

The mobile station 4-1 receives the re-transmission data transmitted from the relay station 3 and conducts again error-correcting decoding and error detection after synthesizing the re-transmission data with the data which has been received and stored previously.

The control unit 25 of the base station 4-1 judges, when ACK is set between the BS and RS and between RS and MS, that data has been received normally in the mobile station 4 and executes the process to transmit the next data as required.

Accordingly, the relay station 3 is capable of controlling the receiving operation of the mobile station 4 by transmitting the control signal to the base station 2.

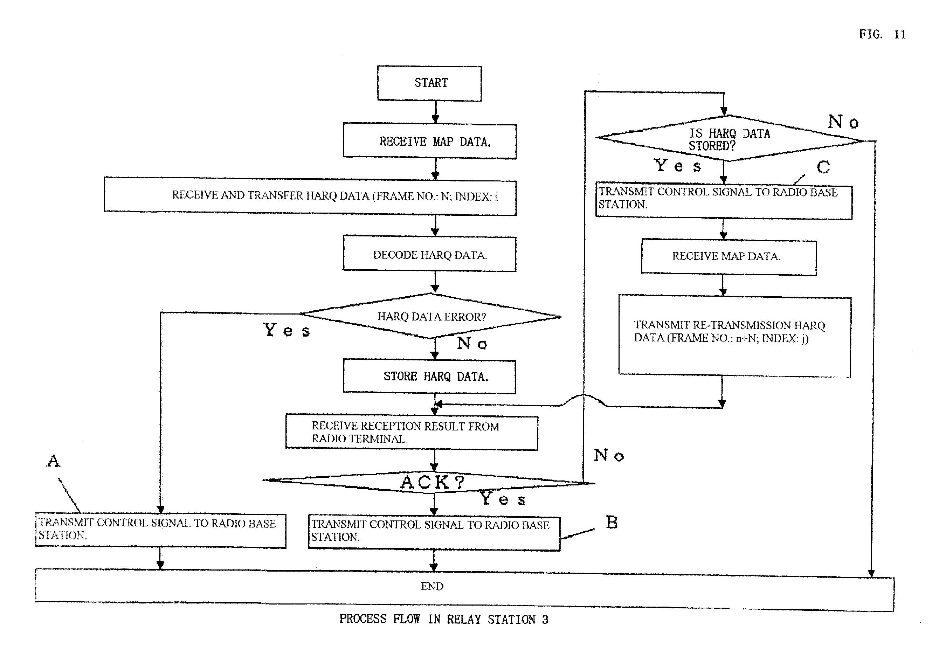

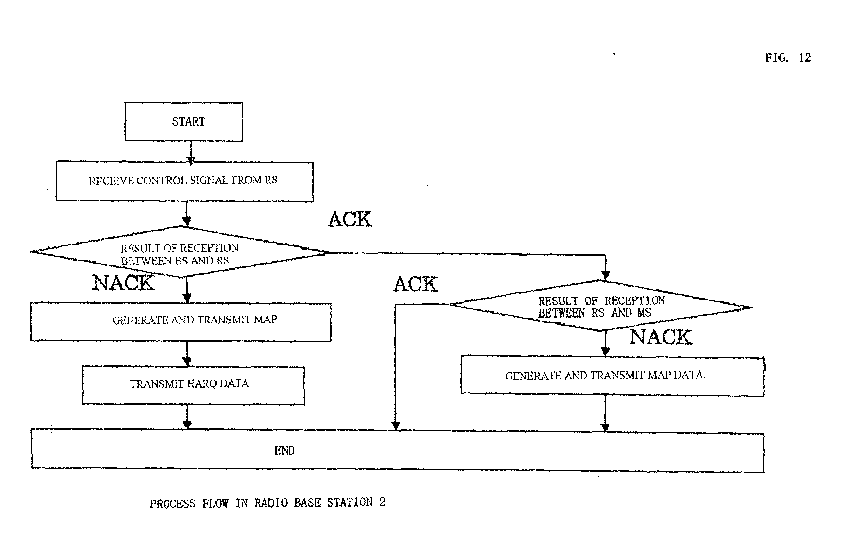

Fig. 11 and Fig. 12 respectively show an example of the process flow in the relay station 3 and an example of the process flow in the base station 2.

Fig. 11 is an example of the process flow in the relay station 3.

The relay station 3 receives the MAP data from the base station 2 to acquire the transmission timing (Frame Number n, Index i) and channel to the base station 4, receives the user data (HARQ data) to be transmitted in the timing via the MMR link, and transmits the user data to the mobile station in the transmission timing and channel indicated in MAP data.

Moreover, the user data received (HARQ data) is demodulated and decoded. On the occasion of data transfer (transmission) to the mobile station 4 of the user data, decoding of the user data received from the base station 2 is omitted and the modulated data can be transmitted through modulation in the modulating unit 39 without executing coding. In this case, decoding is executed after transfer of data to the mobile station 4. When such decoding is possible until start of transmission, it is desirable that the data is transmitted after the data is decoded (error correcting decoding), and the signal after error correction is coded and modulated again.

After the decoding, the relay station 3 can recognize whether error is detected or not. When an error is detected, the relay station 3 transmits the control signal (A) to the base station 2. Content of the control signal A includes Frame Number: n, Index: i, between BS and RS: NACK, between RS and MS4-1: NACK.

When no error is detected, the control unit 41 stores the user data received (HARQ data) to the storage unit and waits for reception of the result of reception from the mobile station 4-1.

Upon reception of the receiving result, the relay station 3 determines whether ACK is set. When ACK is set, the relays station 3 transmits the control signal B to the base station 2. Content of the control signal B includes Frame Number: n, Index: i, between BS and RS: ACK, between RS and MS4-1: ACK.

Meanwhile, when the reception result is NACK, whether the HARQ data is stored or not is determined. When result is NO, the process is terminated. On the other hand, when the result is YES, the control signal C is transmitted to the base station 2. Content of the control signal C includes Frame Number: n, Index: i, between BS and RS: ACK, and between RS and MS4-1: NACK.

The MAP data transmitted from the base station 2 is thereafter received and the HARQ data stored in the storage unit is read out and is then re-transmitted. In this case, re-transmission is executed in the timing designated by the MAP data. Here, contents are as follows. Namely, Frame Number is n+q and Index is j.

Fig. 12 is an example of a process flow in the base station 2.

The base station 2 receives, after transmission of the user data, the control signal from the RS. When the control signal indicates that reception result between the BS and RS is NACK, the base station 2 defines the data transmission timing for re-transmission by the MAP data to re-transmit the HARQ data related to re-transmission to the mobile station 4 via the relay station 3. On the other hand, when the control signal indicates that the reception result between the BS and the RS is ACK, the base station 2 checks the reception result between the RS and the MS. When the result is ACK, the base station 2 starts the transmitting process of the next data without inquiry of re-transmission process of user. When the result between the RS and the MS is NACK, the base station 2 defines data transmission timing for re- transmission with the MAP data. However, in this case, re-transmission from the base station 2 to the relay station 3 is not conducted because the data stored in the relay station 3 is used for the re-transmission.

In the case where the relay station 3 detects an error in the user data received from the base station 2, it is desirable that the relay station 3 stores the information corresponding to the Frame Number and Index without execution of the transmitting process of the user data to the mobile station 4 and transmits the control signal storing NACK as the reception result between the BS and the RS to the base station 2 via the MMR link. The reason is that even if the data having difficulty in error correction is transmitted to the mobile station 4, possibility of successful error correction at the mobile station 4 is rather low.

However, in the case where the HARQ is utilized, successful decoding rate can be improved by combining the data already received with the re-transmitting data. Therefore, if the reception result between the BS and the RS is NACK, the data including an error can be transmitted to the mobile station 4. Namely, the control unit 62 of the mobile station 4 can effectively utilize the receiving data including an error by storing the receiving data including an error in the storage unit and then conducting the decoding after combining such receiving data including an error with the re-transmitted data.

Not only the mobile station 4 but also the relay station 3 is capable of increasing possibility of decoding by conducting the decoding after the data already received is combined with the re-transmitting data (various combinations may be considered, for example, such as combination to obtain average of certainty of each bit).

Moreover, in this embodiment, the NACK signal is actually transmitted, but it is also possible to realize the similar control by appreciating the transmission of the NACK signal that the ACK signal cannot be received within the predetermined time from transmission of data.

When the result NACK is obtained for reception between BS and the RS and between the RS and the MS, the data can be transmitted as only one concentrated NACK information to the base station 2 from the relay station 3.

According to an embodiment of the present invention, a relation station is capable of controlling communications between the relation station and a mobile station.

## Claims

1. A relay station operable to receive, from a base station, a first signal to control a transmitting operation of a mobile station and operable to receive a second signal transmitted from said mobile station in accordance with said first signal, said relay station comprising:
a control unit to generate a control signal affecting said first signal and control transmission of said control signal to said base station, and
a reception processing part to receive a radio signal transmitted from said mobile station which transmits said radio signal in accordance with said first signal which is affected by said control signal.

2. The relay station according to claim 1, wherein the first signal includes information of radio frame format.

3. The relay station according to claim 1 or 2, wherein said transmitting operation includes transmission of a result of measurement of receiving quality.

4. base station operable to transmit a first signal to control transmitting operation of a mobile station and operable to receive, via a relay station, a radio signal transmitted from said mobile station which transmits said radio signal in accordance with the first signal, the base station comprising:
a reception processing part to receive a control signal from said relay station, and
a control unit to generate said first signal on the basis of said control signal and controls transmission of said first signal.

5. A relay station operable to receive, from a base station, a first signal to control receiving operation of a mobile station and transmitting a radio signal to said mobile station, said relay station comprising:
a control unit to generate a control signal affecting said first signal and controls transmission of the control signal to said base station, and
a transmission processing part for transmitting a radio signal to said mobile station on the basis of said first signal which is affected by said control signal.

6. A base station operable to transmit a first signal to control receiving operation of a mobile station and operable to transmit, via a relay station, a radio signal to said mobile station which executes receiving operation in accordance with said first signal, said base station comprising:
a reception processing part to receive a control signal from said relay station, and
a control unit to generate said first signal which is affected by said control signal and control transmission of said first signal affected by said control signal.

7. A relay station operable to receive, from a base station, a first signal to control receiving operation of a mobile station and operable to transmit data received from said base station to said mobile station on the basis of said first signal, said relay station comprising:
a control unit to generate a control signal when an error is detected in said data received from said base station and control to transmit said control signal to said base station,
a reception processing part to receive retransmission data in relation with re-transmission of said data from said base station, and
a transmission processing part to transmit, to said mobile station, said received retransmission data on the basis of said first signal reflecting said control signal.

8. A relay station operable to receive, from a base station, a first signal to control receiving operation of a mobile station and operable to transmit data received from said base station to said mobile station, said relay station comprising:
a storage unit to store said data received from said base station,
a control unit to generate a control signal when an error is not detected in said data received but a signal indicating detection of error in said data is received from said mobile station, which receives said data from said relay station, and transmit said control signal to said base station, and
a transmission processing part to generate a re-transmission data by using said data stored in said storage unit and transmit said re-transmission data to said mobile station on the basis of said first signal based on said control signal-.

9. A base station operable to transmit a first signal to control receiving operation of a mobile station and operable to transmit data to said mobile station via a relay station, said base station comprising:
a reception processing part to receive, from said relay station, a control signal which is generated and transmitted from said relay station when an error is detected in said received data in said relay station, and
a transmission processing part to transmit re-transmission data in relation to re-transmission of said data via said relay station to said mobile station.

10. A base station operable to transmit a first signal to control receiving operation of a mobile station and operable to transmit data to said mobile station via a relay station, said base station comprising:
a reception processing part to receive, from said relay station, a control signal which is generated and transmitted from said relay station when an error is not detected in said received data in said relay station but an error is detected in said data received in said mobile station, and
a transmission processing part to generate said first signal on the basis of said control signal and transmit said first signal to control receiving operation of said mobile station but not transmitting data in relation to re-transmission of said data to said relay station.

11. A method of relaying signals in a relay station comprising:
receiving, from a base station, a first signal to control a transmitting operation of a mobile station;
receiving a second signal transmitted from said mobile station in accordance with said first signal;
generating a control signal affecting first signal;
controlling transmission of said control signal to said base station, and
receiving a radio signal transmitted from said mobile station which transmits said radio signal in accordance with said first signal which is affected by said control signal.

12. The method according to claim 11, wherein the first signal includes information of radio frame format.

13. The method according to claim 11 or 12, wherein said transmitting operation includes transmission of a result of measurement of receiving quality.

14. A method of base station operation comprising:
transmitting a first signal to control transmitting operation of a mobile station;
receiving, via a relay station, a radio signal transmitted from said mobile station which transmits said radio signal in accordance with the first signal;
receiving a control signal from said relay station; and
generating said first signal based on said control signal and controlling transmission of said first signal.

15. A method of relaying signals in a relay station comprising:
receiving, from a base station, a first signal to control receiving operation or a mobile station;
transmitting a radio signal to said mobile station;
generating a control signal affecting said first signal;
controlling transmission of the control signal to said base station, and
transmitting a radio signal to said mobile station based on said first signal which is affected by said control signal.

16. A method of base station operation comprising:
transmitting a first signal to control receiving operation of a mobile station;
transmitting, via a relay station, a radio signal to said mobile station which executes a receiving operation in accordance with said first signal;
receiving a control signal from said relay station; and
generating said first signal based on said control signal and controlling transmission of said first signal based on said control signal.

17. A method of relaying signals in a relay station comprising:
receiving, from a base station, a first signal to control receiving operation of a mobile station;
transmitting data received from said base station to said mobile station based on said first signal, said relay station;
generating a control signal when an error is detected in said data received from said base station and controlling to transmit said control signal to said base station;
receive retransmission data related to re-transmission of said data from said base station; and
transmitting, to said mobile station, said received retransmission data on the basis of said first signal which is affected by said control signal.

18. A method of relaying signals in a relay station comprising:
receiving, from a base station, a first signal to control a receiving operation of a mobile station;
transmitting data received from said base station to said mobile station;
storing said data received from said base station;
generating a control signal when an error is not detected in said data received but a signal indicating detection of error in said data is received from said mobile station, which receives said data from said relay station, and transmitting said control signal to said base station; and
generating a re-transmission data by using said data stored in said storage unit and transmitting said re-transmission data to said mobile station on the basis of said first signal which is affected by said control signal.

19. A method of base station operation comprising:
transmitting a first signal to control a receiving operation of a mobile station;
transmitting data to said mobile station via a relay station
receiving, from said relay station, a control signal which is generated and transmitted from said relay station when an error is detected in said received data in said relay station; and
transmitting re-transmission data in relation to re-transmission of said data via said relay station to said mobile station.

20. A method of base station operation comprising:
transmitting a first signal to control receiving operation of a mobile station;
transmitting data to said mobile station via a relay station
receiving, from said relay station, a control signal which is generated and transmitted from said relay station when an error is not detected in said received data in said relay station but an error is detected in said data received in said mobile station; and
generating said first signal on the basis of said control signal and transmitting said first signal to control receiving operation of said mobile station but not transmitting data in relation to re-transmission of said data to said relay station.
